(19) Europäisches Patentamt
European Patent Office
Office européen des brevets

(11) Publication number: 0 322 195 A1

(12) # EUROPEAN PATENT APPLICATION

(21) Application number: 88312070.1

(22) Date of filing: 20.12.88

(51) Int. Cl.4: C07F 9/44, C07F 9/56, C07F 9/65, A01N 57/26

(30) Priority: 23.12.87 US 137096

(43) Date of publication of application: 28.06.89 Bulletin 89/26

(84) Designated Contracting States: ES GR

(71) Applicant: E.I. DU PONT DE NEMOURS AND COMPANY
Legal Department 1007 Market Street
Wilmington Delaware 19898(US)

(72) Inventor: Fahmy, Mohamed Abdel Hamid
4671 Norwood Drive
Wilmington Delaware 19803(US)

(74) Representative: Hildyard, Edward Martin et al
Frank B. Dehn & Co. European Patent Attorneys Imperial House 15-19 Kingsway
London WC2B 6UZ(GB)

(54) N-Formyl phosphonamidothioates.

(57) This invention relates to certain N-formyl phosphonamidothioates, agriculturally suitable compositions containing them, and their use as insecticides, acaricides and nematocides.

EP 0 322 195 A1

## N-FORMYL PHOSPHONAMIDOTHIOATES

### Background of the Invention

This invention relates to certain N-formyl phosphonamidothioates, agriculturally suitable compositions containing them, and their use as insecticides, acaricides and nematocides.

U.S. 4,683,224 discloses insecticidal, acaricidal and nematocidal N-formyl phosphonamidothioates of the formula

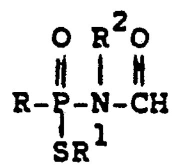

wherein, in part,

R is $C_1$ to $C_6$ alkyl, alkenyl, phenyl or benzyl;

$R_1$ is $C_3$ to $C_6$ alkyl, phenyl or benzyl; and

$R_2$ is H, alkyl, alkenyl or $C_1$ to $C_6$ alkyl substituted by phenyl.

JP 60.239,492 priority date May 4, 1984 discloses compounds of the formula

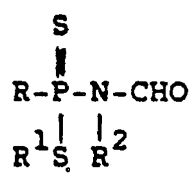

wherein, in part,

R is alkyl or phenyl;

$R^1$ is alkyl; and

$R^2$ is alkyl, alkenyl or cycloalkyl.

Wustner, et al., J. Agric. Food Chem. 26 (5) 1104 (1978) discloses insecticidal phosphonamidothioates of the formula

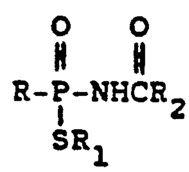

wherein R is $C_2$ alkyl; $R_1$ is $C_1$ to $C_2$ alkyl; and $R_2$ is $C_1$ to $C_5$ alkyl or $C_4$ alkenyl.

U.S. 4,168,305 discloses arthropodicidal and nematocidal dithiophosphonic acid ester-amides of the formula

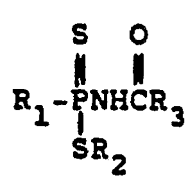

wherein $R_1$ is $C_1$ to $C_5$ alkyl; $R_2$ is $C_1$ to $C_6$ alkyl; and $R_3$ is $C_1$ to $C_6$ alkenyloxy or alkynyloxy, ($C_1$ to $C_3$

alkoxy)($C_1$ to $C_3$ alkoxy), phenoxy, halogenophenoxy, benzyloxy, $C_1$ to $C_6$ alkylamino, di($C_1$ to $C_2$ alkyl) amino, phenylamino, chlorophenylamino or alkylamino.

U.S. 4,544,533 discloses arthropocidal phosphonamidothioates of the formula

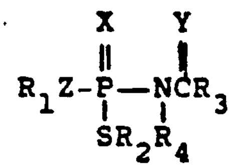

wherein $R_3$ is H, $CH_3$, carbo($C_1$ to $C_4$) alkoxy or thiocarbo($C_1$ to $C_4$) alkoxy; $R_4$ is, in part, H, unsubstituted or substituted $C_1$ to $C_7$ alkyl, unsubstituted or substituted $C_3$ to $C_6$ alkenyl; $C_3$ to $C_6$ alkynyl; unsubstituted or substituted phenyl or naphthyl, $C_1$ to $C_3$ alkyl; and X, Y and Z are independently O or S provided that both X and Y are not O at the same time except that, in the case that X and Y are both O and Z is S, then $R_1$ is n-$C_3H_7$ or $SC_4H_9$; $R_2$ is $SC_4H_9$; $R_5$ is H and $R_4$ is $CH_3$.

## Summary of the Invention

This invention pertains to novel compounds of Formula I, including stereoisomers, suitable agricultural compositions containing them and their use as broad spectrum agricultural insecticides, acaricides and nematocides.

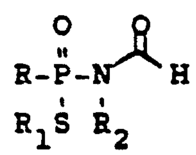

I

wherein

R is $C_1$ to $C_6$ alkyl, $C_2$ to $C_6$ alkenyl, $C_3$ to $C_6$ alkynyl, $C_3$ to $C_6$ cycloalkyl, $C_4$ to $C_7$ alkylcycloalkyl, phenyl or benzyl said phenyl or benzyl may be optionally substituted by 1 to 3 substituents selected from W;

$R_1$ is $C_3$ to $C_8$ alkyl unsubstituted or optionally substituted by $C_1$ to $C_3$ alkoxy, $C_2$ to $C_4$ alkoxycarbonyl, CN, $NO_2$, $C_1$ to $C_3$ alkylthio or 1 to 3 fluorines; phenyl or benzyl said phenyl or benzyl may be optionally substituted by 1 to 3 substituents selected from W;

$R_2$ is $C_1$ to $C_6$ alkyl optionally substituted by 1 to 3 halogens, $NO_2$, C· to $C_3$ alkoxy, $C_1$ to $C_3$ alkylthio, CN, $CO_2R_3$, $CONR_4R_5$, phenoxy and phenylthio, said phenoxy and phenylthio optionally substituted with 1 to 3 substituents selected from W;

$R_3$ is $C_1$ to $C_6$ alkyl unsubstituted or optionallysubstituted by 1 to 3 halogens, CN, $C_1$ to $C_3$ alkoxy or $C_1$ to $C_3$ alkylthio; phenyl or benzyl said phenyl or benzyl may be optionally substituted with 1 to 3 substituents selected from W;

$R_4$ and $R_5$ are H, $C_1$ to $C_4$ alkyl, or taken together:

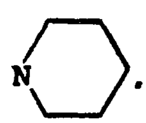, 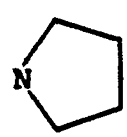, 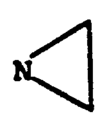, 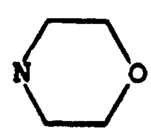 ; and

W is H, halogen, $C_1$ to $C_3$ alkoxy, $C_1$ to $C_3$ alkylthio, $C_1$ to $C_3$ alkyl, $C_1$ to $C_3$ haloalkyl, $C_1$ to $C_3$ alkylsulfonyl, $C_1$ to $C_3$ haloalkoxy, CN, $NO_2$, $NH_2$, $C_1$ to $C_3$ alkylamino or $C_2$ to $C_4$ dialkylamino.

In the above definitions, the term "alkyl", used either alone or in compound words such as "alkylthio" or "haloalkyl", denotes straight chain or branched alkyl including methyl, ethyl, n-propyl, isopropyl or the different butyl isomers. Alkoxy denotes methoxy and ethoxy. Alkenyl denotes straight chain or branched

alkenes including 1-propenyl, 2-propenyl, 3-propenyl and the different butenyl isomers.

Alkynyl denotes straight chain or branched alkynes including ethynyl, 1-propynyl, 2-propynyl and the different butynyl isomers. Alkylsulfonyl denotes methylsulfonyl and ethylsulfonyl. Alkylthio, alkylamino, and the like are defined analogously.

The term "halogen", either alone or in compound words such as "haloalkyl", denotes fluorine, chlorine, bromine or iodine. Further, when used in compound words such as "haloalkyl" said alkyl can be partially halogenated or fully substituted with halogen atoms and said halogen atoms can be the same or different. Examples of haloalkyl include $CH_2CH_2F$, $CF_2CF_3$, $CH_2CHFCl$ and $CF_3$.

The total number of carbon atoms in a substituent group is indicated by the $C_i$ to $C_j$ prefix where i and j are numbers from 1 to 10. For example, $C_1$ to $C_{10}$ alkyl would designate methyl through decyl.

Preferred for reasons that include greater insecticidal, acaricidal and nematocidal activity are compounds of Formula I wherein:

$R_1$ is a $C_3$ to $C_5$ n-alkyl or $C_3$ to $C_8$ branched alkyl, said alkyl optionally substituted by phenyl or benzyl substituted by W.

More preferred are the preferred compounds of the preceding group wherein:

R is $C_1$ to $C_3$ alkyl, $C_2$ to $C_3$ alkenyl, propargyl, phenyl or phenyl substituted by W;

$R_2$ is $C_1$ to $C_6$ alkyl optionally substituted by CN, $CO_2R_3$ or $CONR_4R_5$; and

$R_3$ is $C_1$ to $C_6$ alkyl unsubstituted or optionally substituted by 1 to 3 halogens, $C_1$ to $C_3$ alkoxy, $C_1$ to $C_3$ alkylthio or CN.

Most preferred are the more preferred compounds of the preceding group wherein:

R is $C_1$ to $C_2$ alkyl;

$R_1$ is $C_3$ to $C_4$ n-alkyl or $C_3$ to $C_5$ branched alkyl;

$R_2$ is $C_1$ to $C_2$ alkyl substituted by CN, $CO_2R_3$ or $CONR_4R_5$;

$R_3$ is $C_1$ to $C_3$ alkyl; and

$R_4$ and $R_5$ are H or $C_1$ to $C_2$ alkyl.

Specifically preferred is S-(1-methylpropyl) N-(1-ethoxycarbonylethyl) N-formyl-P-methylphosphonamidothioate.

## Details of the Invention

The compounds of Formula I can be prepared by the reaction of a metallated phosphonamidothioate of Formula II in which M represents a metal ion such as lithium, sodium or potassium with an anhydride of formic acid and an alkanoic acid of two to eight carbon atoms.

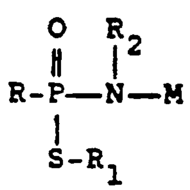

(II)

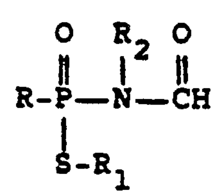

(I)

The preferred anhydride is acetic-formic anhydride which is prepared from acetyl chloride and sodium formate according to the procedure described in "Reagents for Organic Synthesis," Fieser and Fieser, Volume 2, Page 10, Wiley-Interscience (1969). The compounds of Formula II can be prepared by treating a phosphonamidothioate of Formula III

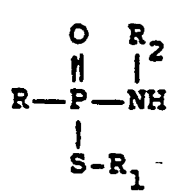

(III)

with alkali metal bases such as aryl or alkyllithium, aryl or alkylmagnesium halides, or with alkali metal

alkoxides and hydrides such as potassium alkoxide or sodium hydride.

The treatment of III with these bases is effected by mixing the two reagents in the presence of a solvent. Suitable solvents include ether, tetrahydrofuran and hexane. In most cases, it is desirable to mix the reagents at a low temperature, 0° C to -70° C. The metallated phosphonamidothioate formed in this manner is held at this temperature during its treatment with the appropriate amount of acetic-formic anhydride to form compounds of Formula I, followed by warming the mixture to room temperature to complete the reaction.

Generally, it may be desirable to employ a moderate stoichiometric excess, up to 20%, of the anhydride relative to the phosphonamidothioate. Water should be excluded from the reaction mixture, by using anhydrous reagents and conducting the treatment in a nitrogen atmosphere. The product is isolated and purified by conventional techniques as demonstrated in Example 1. The phosphonamidothioate precursors of Formula III can be prepared by conventional methods as, for example, by analogy to procedures described by Cadogan, Journal of the Chemical Society (London), 1961, pages 3067 to 3070. This general methodology utilizes the reaction of the appropriate phosphonochloridothioates of Formula IV with the appropriate primary amine of the Formula V.

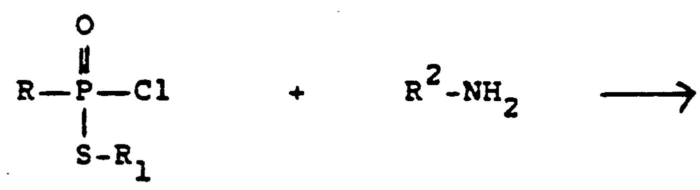

(III)

(IV) (V)

The treatment of IV with the amine V can be carried out as described in U.S. 4,683,224. Also, the amine V can be utilized in the form of its hydrochloride or bromide salts and generated in place by the addition of triethylamine or other tertiary amines.

The phosphonochloridothioate precursors IV can be prepared by a method analogous to that described in U.S. 4,168,305, by treating a phosphonic acid dichloride of the Formula VI

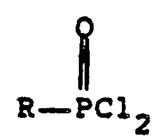

(VI)

with the appropriate thiol, $R_1$-SH, in the presence of an inert solvent and an amine base as a hydrogen chloride acceptor. The phosphonochloridothioates of Formula IV also can be prepared by the method described by Neimysheva, et al., Journal of General Chemistry, U.S.S.R. (English), 1966, Volume 36, pages 520 to 525, by slowly adding the appropriate sulfenyl chloride of Formula VII to a stirred solution of the appropriate phosphonous dichloride of Formula VIII in sulfur dioxide at a temperature of about -15° to -70° C, stripping it of volatiles and vacuum-distilling the residue to give the product, IV:

$$R_1\text{-SCl} + R\text{-PCl}_2 \longrightarrow \text{(IV)}$$

(VII) (VIII)

Still another method for the preparation of phosphonochloridothioates of Formula IV involves the reaction of an S,S-dialkyl phosphonodithioate of the Formula IX

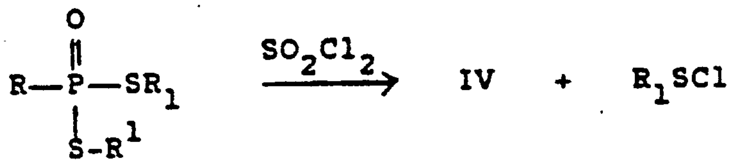

(IX)

with a chlorinating agent such as chlorine or sulfuryl chloride as described in U.S. 4,683,224.

The phosphonodithioate of Formula IX can be prepared by known methods. Conveniently, they can be prepared by treating the appropriate alkylphosphonic dichloride VI with two equivalents of the appropriate thiol, R·SH, and two equivalents of a hydrogen chloride acceptor.

Alternatively, compounds of Formula I can be prepared by the reaction of phosphonochloridothioate of Formula IV with ammonia to form phosphonamidothioates of Formula X.

(IV) 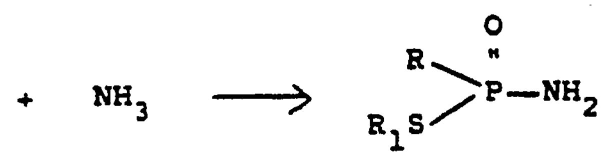 (X)

These, in turn, can be formylated at the nitrogen atom with acetic-formic anhydride as previously described to form N-formylphosphonamidothiates of Formula XI

(X) 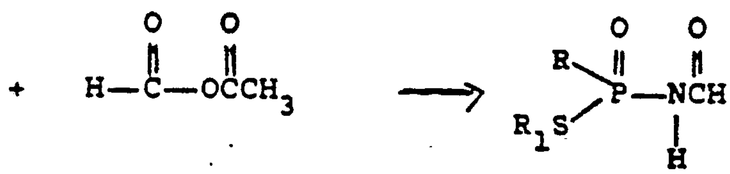 (XI)

in a manner similar to the procedure described in U.S. 4,683,224. Compounds of Formula XI are then reacted with compounds of Formula XII

$$(XI) \quad + \quad R^2{-}X \quad \longrightarrow \quad (I)$$

(XII)

wherein X represents a halogen such as chloro, bromo, or iodo, or an unsubstituted or substituted benzenesulfonyloxy group, in the presence of an acid acceptor such as potassium or sodium carbonate.

The following Examples illustrate the invention.

## Example 1

### S-(1-methylpropyl) N-(1-ethoxycarbonyl)ethyl-N-formyl-P-methylphosphonamidothioate (1)

#### Part A

Under nitrogen, 54.8 g (0.41 mol) of sulfuryl chloride was added dropwise to 34.7 g (0.38 mol) of 1-methylpropanethiol at 3° to 7° C. After the complete addition of sulfuryl chloride, the solution was stirred at 3° C for 15 minutes. The resulting solution was added dropwise to a solution of 50 g (0.42 mol) of

methylphosphonous dichloride in 100 mL of liquid sulfur dioxide at -60° C. The mixture was stirred for one hour at -70° C, then the temperature of the reaction was allowed to rise to room temperature and then stirred under nitrogen for two days. The solution was concentrated under vacuum and the residue was distilled, b.p.: 45° to 47° C at 0.15 mmHg, to give 37 g of S-(1-methylpropyl) methylphosphonochloridothioate (1A) as a yellow liquid.

Part B

To a stirring solution of 5.0 g of 1A (27 mmol), and 4.14 g (27 mmol) of D, L alanine ethyl ester hydrochloride in 50 mL tetrahydrofuran, under nitrogen and cooled to 0° C, was added 5.45 g (54 mmol) of triethylamine drop by drop. The resulting solution was stirred at room temperature over night. The solution was concentrated under vacuum and the residue was partitioned between water and methylene chloride. The organic phase was dried over $MgSO_4$, filtered, and the solvent was evaporated under vacuum. The residual oil was flash chromatographed on silica gel using ethyl acetate as an eluent to give 4.4 g of S-(1-methylpropyl) N-(1-ethoxycarbonyl)ethyl-P-methylphosphonamidothioate (1B) as a yellow liquid.

Part C

Under nitrogen, 0.4 g (1.5 mmol) of 1B was dissolved in 10 mL tetrahydrofuran. The solution was stirred and cooled to -70° C. To this solution was added 0.63 mL (1.6 mmol) of n-butyllithium (2.6 m in hexane) and stirring was continued for 30 minutes at -70° C. A solution of 0.14 g of acetic-formic anhydride in 2 mL tetrahydrofuran was added dropwise at -70° C. The reaction mixture was allowed to warm to room temperature gradually over night. The solution was concentrated under vacuum and the residue was flash chromatographed over silica gel using hexane:ether (4:1) mixture as the eluent to give 0.15 g of the desired product (1). H'-NMR spectrum of 1 showed the following chemical shifts (ppm). 8.85 (s, 1H, CHO); 4.22 (q, 2H, (J = 7.5), $OCH_2$); 4.3-4.1 (m, 1H, NCH); 3.52 (m, 1H, SCH); 2.0 (d, 3H (J = 15); $PCH_3$); 1.9-0.9 (m, 14H, alkylprotons).

Application of the procedures of Example 1 afforded the compounds listed in Table 1.

## Table 1

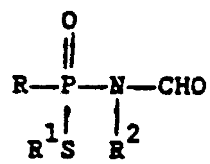

| Example | R | $R^1$ | $R^2$ | $^1$H-NMR (δ in ppm) SCH multiplet | CHO singlet |
|---|---|---|---|---|---|
| 2 | $CH_3$ | $CH(CH_3)C_2H_5$ | $CH(CH_3)COOC_2H_5$ (D isomer) | 3.5 | 8.8 |
| 3 | $CH_3$ | $CH(CH_3)C_2H_5$ | $CH(CH_3)COOC_2H_5$ (L isomer) | 3.5 | 8.8 |
| 4 | $C_2H_5$ | $CH(CH_3)C_2H_5$ | $CH_2COOC_2H_5$ | 3.5 | 8.9 |
| 5 | $C_2H_5$ | $CH(CH_3)C_2H_5$ | $CH(CH_3)COOC_2H_5$ (D isomer) | 3.5 | 8.8 |
| 6 | $C_2H_5$ | $CH(CH_3)C_2H_5$ | $CH(CH_3)COOC_2H_5$ (L isomer) | 3.6 | 8.8 |
| 7 | $C_2H_5$ | $CH(CH_3)C_2H_5$ | $CH_2COOCH_3$ | 3.5 | 9.0 |
| 8 | $C_2H_5$ | $CH(CH_3)C_2H_5$ | $CH(iso\text{-}C_4H_9)COOCH_3$ (L isomer) | 3.5 | 8.9 |
| 9 | $C_2H_5$ | $CH(CH_3)C_2H_5$ | $CH_2COOC_3H_7$-iso | 3.5 | 9.0 |
| 10 | $C_2H_5$ | $C_3H_7$ | $CH_2COOC_3H_7$-iso | 2.9 | 8.9 |
| 11 | $CH_3$ | $CH(CH_3)C_2H_5$ | $CH_2COOC_3H_7$-iso | 3.5 | 9.0 |

By the general procedures described herein and in Example 1. one can prepare the compounds of Table 2.

## General Structure Table 2

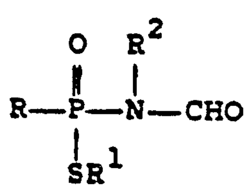

## TABLE 2

| R | $R^1$ | $R^2$ |
|---|---|---|
| $CH_3$ | $C_3H_7$ | $CH_2COOCH_3$ |
| $CH_3$ | $C_3H_7$ | $CH_2COOC_2H_5$ |
| $CH_3$ | $C_3H_7$ | $CH_2COOC_3H_7$-iso |
| $CH_3$ | $C_3H_7$ | $CH(CH_3)COOCH_3$ |
| $CH_3$ | $C_3H_7$ | $CH(CH_3)COOC_2H_5$ |
| $CH_3$ | $C_3H_7$ | $CH_2CH_2COOCH_3$ |
| $CH_3$ | $C_3H_7$ | $CH_2CH_2COOC_2H_5$ |
| $CH_3$ | $C_3H_7$ | $CH_2CH_2COOC_3H_7$-iso |
| $CH_3$ | $C_3H_7$ | $CH(C_3H_7$-iso$)COOCH_3$ |
| $CH_3$ | $C_3H_7$ | $CH(C_3H_7$-iso$)COOC_2H_5$ |
| $CH_3$ | $C_3H_7$ | $CH_2CON(CH_3)_2$ |
| $CH_3$ | $C_3H_7$ | $CH_2CONHCH_3$ |
| $CH_3$ | $C_3H_7$ | $CH(CH_3)CONHCH_3$ |
| $CH_3$ | $C_3H_7$ | $CH(CH_3)CON(CH_3)_2$ |
| $CH_3$ | $C_3H_7$ | $CH_2CO$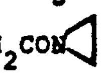 |
| $CH_3$ | $C_3H_7$ | $CH_2CO$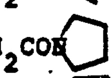 |
| $CH_3$ | $C_3H_7$ | $CH_2CO$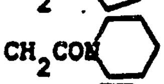 |
| $CH_3$ | $C_3H_7$ | $CH_2CO$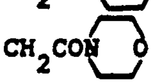 |
| $CH_3$ | $C_3H_7$ | $CH(CH_3)CO$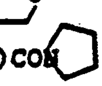 |
| $CH_3$ | $C_3H_7$ | $CH(CH_3)CO$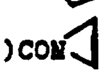 |
| $CH_3$ | $C_3H_7$ | $CH_2CH_2CONHCH_3$ |
| $CH_3$ | $C_3H_7$ | $CH_2CH_2CON(CH_3)_2$ |
| $CH_3$ | $C_3H_7$ | $CH_2CH_2CO$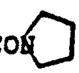 |
| $CH_3$ | $C_3H_7$ | $CH_2CH_2CO$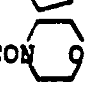 |

TABLE 2 (continued)

| R | $R^1$ | $R^2$ |
|---|---|---|
| $CH_3$ | $C_3H_7$ | $CH_2CH_2CON(C_2H_5)_2$ |
| $CH_3$ | $C_3H_7$ | $CH(CH_3)CON(C_2H_5)_2$ |
| $CH_3$ | $C_3H_7$ | $CH_2CH_2COOC_6H_5$ |
| $CH_3$ | $C_3H_7$ | $CH_2COOC_6H_5$ |
| $CH_3$ | $C_3H_7$ | $CH_2COOCH_2C_6H_5$ |
| $CH_3$ | $C_3H_7$ | $CH(CH_3)COOC_6H_5$ |
| $CH_3$ | $C_3H_7$ | $CH(CH_3)COOCH_2C_6H_5$ |
| $CH_3$ | $C_3H_7$ | $CH_2CN$ |
| $CH_3$ | $C_3H_7$ | $CH_2CF_3$ |
| $CH_3$ | $C_3H_7$ | $CH_2SCH_3$ |
| $CH_3$ | $C_3H_7$ | $CH_2SC_6H_5$ |
| $CH_3$ | $C_3H_7$ | $CH_2CH_2CH_2Cl$ |
| $CH_3$ | $C_3H_7$ | $CH_2OCH_3$ |
| $CH_3$ | $C_3H_7$ | $CH_2SC_6H_4$-4-F |
| $CH_3$ | $C_3H_7$ | $CH_2SC_6H_4$-4-Cl |
| $CH_3$ | $C_3H_7$ | $CH_2OC_6H_4$4-Cl |
| $CH_3$ | $C_3H_7$ | $CH_2OC_6H_5$ |
| $C_2H_5$ | $C_3H_7$ | $CH_2COOCH_3$ |
| $C_2H_5$ | $C_3H_7$ | $CH_2COOC_2H_5$ |
| $C_2H_5$ | $C_3H_7$ | $CH_2COOC_3H_7$-iso |
| $C_2H_5$ | $C_3H_7$ | $CH(CH_3)COOCH_3$ |
| $C_2H_5$ | $C_3H_7$ | $CH(CH_3)COOC_2H_5$ |
| $C_2H_5$ | $C_3H_7$ | $CH_2CH_2COOCH_3$ |
| $C_2H_5$ | $C_3H_7$ | $CH_2CH_2COOC_2H_5$ |
| $C_2H_5$ | $C_3H_7$ | $CH_2CH_2COOC_3H_7$-iso |
| $C_2H_5$ | $C_3H_7$ | $CH(C_3H_7$-iso$)COOCH_3$ |
| $C_2H_5$ | $C_3H_7$ | $CH(C_3H_7$-iso$)COOC_2H_5$ |
| $C_2H_5$ | $C_3H_7$ | $CH_2CON(CH_3)_2$ |
| $C_2H_5$ | $C_3H_7$ | $CH_2CONHCH_3$ |
| $C_2H_5$ | $C_3H_7$ | $CH(CH_3)CONHCH_3$ |
| $C_2H_5$ | $C_3H_7$ | $CH(CH_3)CON(CH_3)_2$ |

**TABLE 2 (continued)**

| R | $R^1$ | $R^2$ |
|---|---|---|
| $C_2H_5$ | $C_3H_7$ | $CH_2CON$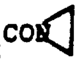 |
| $C_2H_5$ | $C_3H_7$ | $CH_2CON$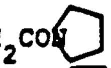 |
| $C_2H_5$ | $C_3H_7$ | $CH_2CON$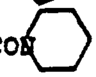 |
| $C_2H_5$ | $C_3H_7$ | $CH_2CON$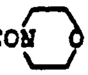 |
| $C_2H_5$ | $C_3H_7$ | $CH(CH_3)CON$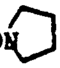 |
| $C_2H_5$ | $C_3H_7$ | $CH(CH_3)CON$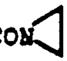 |
| $C_2H_5$ | $C_3H_7$ | $CH_2CH_2CONHCH_3$ |
| $C_2H_5$ | $C_3H_7$ | $CH_2CH_2CON(CH_3)_2$ |
| $C_2H_5$ | $C_3H_7$ | $CH_2CH_2CON$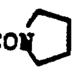 |
| $C_2H_5$ | $C_3H_7$ | $CH_2CH_2CON$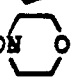 |
| $C_2H_5$ | $C_3H_7$ | $CH_2CH_2CON(C_2H_5)_2$ |
| $C_2H_5$ | $C_3H_7$ | $CH(CH_3)CON(C_2H_5)_2$ |
| $C_2H_5$ | $C_3H_7$ | $CH_2CH_2COOC_6H_5$ |
| $C_2H_5$ | $C_3H_7$ | $CH_2COOC_6H_5$ |
| $C_2H_5$ | $C_3H_7$ | $CH_2COOCH_2C_6H_5$ |
| $C_2H_5$ | $C_3H_7$ | $CH(CH_3)COOC_6H_5$ |
| $C_2H_5$ | $C_3H_7$ | $CH(CH_3)COOCH_2C_6H_5$ |
| $C_2H_5$ | $C_3H_7$ | $CH_2CN$ |
| $C_2H_5$ | $C_3H_7$ | $CH_2CF_3$ |
| $C_2H_5$ | $C_3H_7$ | $CH_2SCH_3$ |
| $C_2H_5$ | $C_3H_7$ | $CH_2SC_6H_5$ |
| $C_2H_5$ | $C_3H_7$ | $CH_2CH_2CH_2Cl$ |
| $C_2H_5$ | $C_3H_7$ | $CH_2OCH_3$ |
| $C_2H_5$ | $C_3H_7$ | $CH_2SC_6H_4$-4-F |
| $C_2H_5$ | $C_3H_7$ | $CH_2SC_6H_4$-4-Cl |
| $C_2H_5$ | $C_3H_7$ | $CH_2OC_6H_4$-4-Cl |
| $C_2H_5$ | $C_3H_7$ | $CH_2OC_6H_5$ |

TABLE 2 (continued)

| R | $R^1$ | $R^2$ |
|---|---|---|
| $CH_3$ | $CH(CH_3)_2$ | $CH_2COOCH_3$ |
| $CH_3$ | $CH(CH_3)_2$ | $CH_2COOC_2H_5$ |
| $CH_3$ | $CH(CH_3)_2$ | $CH_2COOC_3H_7$-iso |
| $CH_3$ | $CH(CH_3)_2$ | $CH(CH_3)COOCH_3$ |
| $CH_3$ | $CH(CH_3)_2$ | $CH(CH_3)COOC_2H_5$ |
| $CH_3$ | $CH(CH_3)_2$ | $CH_2CH_2COOCH_3$ |
| $CH_3$ | $CH(CH_3)_2$ | $CH_2CH_2COOC_2H_5$ |
| $CH_3$ | $CH(CH_3)_2$ | $CH_2CH_2COOC_3H_7$-iso |
| $CH_3$ | $CH(CH_3)_2$ | $CH(C_3H_7$-iso$)COOCH_3$ |
| $CH_3$ | $CH(CH_3)_2$ | $CH(C_3H_7$-iso$)COOC_2H_5$ |
| $CH_3$ | $CH(CH_3)_2$ | $CH_2CON(CH_3)_2$ |
| $CH_3$ | $CH(CH_3)_2$ | $CH_2CONHCH_3$ |
| $CH_3$ | $CH(CH_3)_2$ | $CH(CH_3)CONHCH_3$ |
| $CH_3$ | $CH(CH_3)_2$ | $CH(CH_3)CON(CH_3)_2$ |
| $CH_3$ | $CH(CH_3)_2$ | $CH_2CO$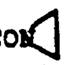 |
| $CH_3$ | $CH(CH_3)_2$ | $CH_2CO$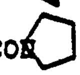 |
| $CH_3$ | $CH(CH_3)_2$ | $CH_2CO$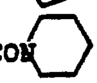 |
| $CH_3$ | $CH(CH_3)_2$ | $CH_2CO$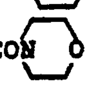 |
| $CH_3$ | $CH(CH_3)_2$ | $CH(CH_3)CO$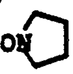 |
| $CH_3$ | $CH(CH_3)_2$ | $CH(CH_3)CO$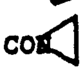 |
| $CH_3$ | $CH(CH_3)_2$ | $CH_2CH_2CONHCH_3$ |
| $CH_3$ | $CH(CH_3)_2$ | $CH_2CH_2CON(CH_3)_2$ |
| $CH_3$ | $CH(CH_3)_2$ | $CH_2CH_2CO$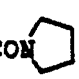 |
| $CH_3$ | $CH(CH_3)_2$ | $CH_2CH_2CO$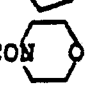 |
| $CH_3$ | $CH(CH_3)_2$ | $CH_2CH_2CON(C_2H_5)_2$ |
| $CH_3$ | $CH(CH_3)_2$ | $CH(CH_3)CON(C_2H_5)_2$ |
| $CH_3$ | $CH(CH_3)_2$ | $CH_2CH_2COOC_6H_5$ |
| $CH_3$ | $CH(CH_3)_2$ | $CH_2COOC_6H_5$ |

TABLE 2 (continued)

| R | $R^1$ | $R^2$ |
|---|---|---|
| $CH_3$ | $CH(CH_3)_2$ | $CH_2COOCH_2C_6H_5$ |
| $CH_3$ | $CH(CH_3)_2$ | $CH(CH_3)COOC_6H_5$ |
| $CH_3$ | $CH(CH_3)_2$ | $CH(CH_3)COOCH_2C_6H_5$ |
| $CH_3$ | $CH(CH_3)_2$ | $CH_2CN$ |
| $CH_3$ | $CH(CH_3)_2$ | $CH_2CF_3$ |
| $CH_3$ | $CH(CH_3)_2$ | $CH_2SCH_3$ |
| $CH_3$ | $CH(CH_3)_2$ | $CH_2SC_6H_5$ |
| $CH_3$ | $CH(CH_3)_2$ | $CH_2CH_2CH_2Cl$ |
| $CH_3$ | $CH(CH_3)_2$ | $CH_2OCH_3$ |
| $CH_3$ | $CH(CH_3)_2$ | $CH_2SC_6H_4$-4-F |
| $CH_3$ | $CH(CH_3)_2$ | $CH_2SC_6H_4$-4-Cl |
| $CH_3$ | $CH(CH_3)_2$ | $CH_2OC_6H_4$-4-Cl |
| $CH_3$ | $CH(CH_3)_2$ | $CH_2OC_6H_5$ |
| $C_2H_5$ | $CH(CH_3)_2$ | $CH_2COOCH_3$ |
| $C_2H_5$ | $CH(CH_3)_2$ | $CH_2COOC_2H_5$ |
| $C_2H_5$ | $CH(CH_3)_2$ | $CH_2COOC_3H_7$-iso |
| $C_2H_5$ | $CH(CH_3)_2$ | $CH(CH_3)COOCH_3$ |
| $C_2H_5$ | $CH(CH_3)_2$ | $CH(CH_3)COOC_2H_5$ |
| $C_2H_5$ | $CH(CH_3)_2$ | $CH_2CH_2COOCH_3$ |
| $C_2H_5$ | $CH(CH_3)_2$ | $CH_2CH_2COOC_2H_5$ |
| $C_2H_5$ | $CH(CH_3)_2$ | $CH_2CH_2COOC_3H_7$-iso |
| $C_2H_5$ | $CH(CH_3)_2$ | $CH(C_3H_7$-iso$)COOCH_3$ |
| $C_2H_5$ | $CH(CH_3)_2$ | $CH(C_3H_7$-iso$)COOC_2H_5$ |
| $C_2H_5$ | $CH(CH_3)_2$ | $CH_2CON(CH_3)_2$ |
| $C_2H_5$ | $CH(CH_3)_2$ | $CH_2CONHCH_3$ |
| $C_2H_5$ | $CH(CH_3)_2$ | $CH(CH_3)CONHCH_3$ |
| $C_2H_5$ | $CH(CH_3)_2$ | $CH(CH_3)CON(CH_3)_2$ |
| $C_2H_5$ | $CH(CH_3)_2$ | $CH_2CON$ 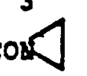 |
| $C_2H_5$ | $CH(CH_3)_2$ | $CH_2CON$ 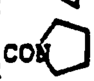 |
| $C_2H_5$ | $CH(CH_3)_2$ | $CH_2CON$ 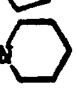 |

TABLE 2 (continued)

| R | $R^1$ | $R^2$ |
|---|---|---|
| $C_2H_5$ | $CH(CH_3)_2$ | $CH_2CON$ 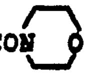 |
| $C_2H_5$ | $CH(CH_3)_2$ | $CH(CH_3)CON$ 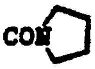 |
| $C_2H_5$ | $CH(CH_3)_2$ | $CH(CH_3)CON$ 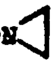 |
| $C_2H_5$ | $CH(CH_3)_2$ | $CH_2CH_2CONHCH_3$ |
| $C_2H_5$ | $CH(CH_3)_2$ | $CH_2CH_2CON(CH_3)_2$ |
| $C_2H_5$ | $CH(CH_3)_2$ | $CH_2CH_2CON$ 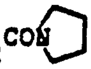 |
| $C_2H_5$ | $CH(CH_3)_2$ | $CH_2CH_2CON$ 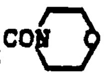 |
| $C_2H_5$ | $CH(CH_3)_2$ | $CH_2CH_2CON(C_2H_5)_2$ |
| $C_2H_5$ | $CH(CH_3)_2$ | $CH(CH_3)CON(C_2H_5)_2$ |
| $C_2H_5$ | $CH(CH_3)_2$ | $CH_2CH_2COOC_6H_5$ |
| $C_2H_5$ | $CH(CH_3)_2$ | $CH_2COOC_6H_5$ |
| $C_2H_5$ | $CH(CH_3)_2$ | $CH_2COOCH_2C_6H_5$ |
| $C_2H_5$ | $CH(CH_3)_2$ | $CH(CH_3)COOC_6H_5$ |
| $C_2H_5$ | $CH(CH_3)_2$ | $CH(CH_3)COOCH_2C_6H_5$ |
| $C_2H_5$ | $CH(CH_3)_2$ | $CH_2CN$ |
| $C_2H_5$ | $CH(CH_3)_2$ | $CH_2CF_3$ |
| $C_2H_5$ | $CH(CH_3)_2$ | $CH_2SCH_3$ |
| $C_2H_5$ | $CH(CH_3)_2$ | $CH_2SC_6H_5$ |
| $C_2H_5$ | $CH(CH_3)_2$ | $CH_2CH_2CH_2Cl$ |
| $C_2H_5$ | $CH(CH_3)_2$ | $CH_2OCH_3$ |
| $C_2H_5$ | $CH(CH_3)_2$ | $CH_2SC_6H_4$-4-F |
| $C_2H_5$ | $CH(CH_3)_2$ | $CH_2SC_6H_4$-4-Cl |
| $C_2H_5$ | $CH(CH_3)_2$ | $CH_2OC_6H_4$-4-Cl |
| $C_2H_5$ | $CH(CH_3)_2$ | $CH_2OC_6H_5$ |

TABLE 2 (continued)

| R | $R^1$ | $R^2$ |
|---|---|---|
| $CH_3$ | $CH(CH_3)C_2H_5$ | $CH_2COOCH_3$ |
| $CH_3$ | $CH(CH_3)C_2H_5$ | $CH_2COOC_2H_5$ |
| $CH_3$ | $CH(CH_3)C_2H_5$ | $CH_2COOC_3H_7$-iso |
| $CH_3$ | $CH(CH_3)C_2H_5$ | $CH(CH_3)COOCH_3$ |
| $CH_3$ | $CH(CH_3)C_2H_5$ | $CH(CH_3)COOC_2H_5$ |
| $CH_3$ | $CH(CH_3)C_2H_5$ | $CH_2CH_2COOCH_3$ |
| $CH_3$ | $CH(CH_3)C_2H_5$ | $CH_2CH_2COOC_2H_5$ |
| $CH_3$ | $CH(CH_3)C_2H_5$ | $CH_2CH_2COOC_3H_7$-iso |
| $CH_3$ | $CH(CH_3)C_2H_5$ | $CH(C_3H_7$-iso$)COOCH_3$ |
| $CH_3$ | $CH(CH_3)C_2H_5$ | $CH(C_3H_7$-iso$)COOC_2H_5$ |
| $CH_3$ | $CH(CH_3)C_2H_5$ | $CH_2CON(CH_3)_2$ |
| $CH_3$ | $CH(CH_3)C_2H_5$ | $CH_2CONHCH_3$ |
| $CH_3$ | $CH(CH_3)C_2H_5$ | $CH(CH_3)CONHCH_3$ |
| $CH_3$ | $CH(CH_3)C_2H_5$ | $CH(CH_3)CON(CH_3)_2$ |
| $CH_3$ | $CH(CH_3)C_2H_5$ | $CH_2CO$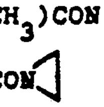 |
| $CH_3$ | $CH(CH_3)C_2H_5$ | $CH_2CO$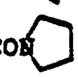 |
| $CH_3$ | $CH(CH_3)C_2H_5$ | $CH_2CO$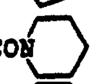 |
| $CH_3$ | $CH(CH_3)C_2H_5$ | $CH_2CO$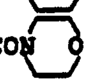 |
| $CH_3$ | $CH(CH_3)C_2H_5$ | $CH(CH_3)CO$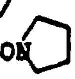 |
| $CH_3$ | $CH(CH_3)C_2H_5$ | $CH(CH_3)CO$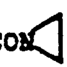 |
| $CH_3$ | $CH(CH_3)C_2H_5$ | $CH_2CH_2CONHCH_3$ |
| $CH_3$ | $CH(CH_3)C_2H_5$ | $CH_2CH_2CON(CH_3)_2$ |
| $CH_3$ | $CH(CH_3)C_2H_5$ | $CH_2CH_2CO$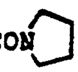 |
| $CH_3$ | $CH(CH_3)C_2H_5$ | $CH_2CH_2CO$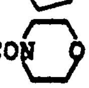 |
| $CH_3$ | $CH(CH_3)C_2H_5$ | $CH_2CH_2CON(C_2H_5)_2$ |
| $CH_3$ | $CH(CH_3)C_2H_5$ | $CH(CH_3)CON(C_2H_5)_2$ |
| $CH_3$ | $CH(CH_3)C_2H_5$ | $CH_2CH_2COOC_6H_5$ |
| $CH_3$ | $CH(CH_3)C_2H_5$ | $CH_2COOC_6H_5$ |

TABLE 2 (continued)

| R | $R^1$ | $R^2$ |
|---|---|---|
| $CH_3$ | $CH(CH_3)C_2H_5$ | $CH_2COOCH_2C_6H_5$ |
| $CH_3$ | $CH(CH_3)C_2H_5$ | $CH(CH_3)COOC_6H_5$ |
| $CH_3$ | $CH(CH_3)C_2H_5$ | $CH(CH_3)COOCH_2C_6H_5$ |
| $CH_3$ | $CH(CH_3)C_2H_5$ | $CH_2CN$ |
| $CH_3$ | $CH(CH_3)C_2H_5$ | $CH_2CF_3$ |
| $CH_3$ | $CH(CH_3)C_2H_5$ | $CH_2SCH_3$ |
| $CH_3$ | $CH(CH_3)C_2H_5$ | $CH_2SC_6H_5$ |
| $CH_3$ | $CH(CH_3)C_2H_5$ | $CH_2CH_2CH_2Cl$ |
| $CH_3$ | $CH(CH_3)C_2H_5$ | $CH_2OCH_3$ |
| $CH_3$ | $CH(CH_3)C_2H_5$ | $CH_2SC_6H_4$-4-F |
| $CH_3$ | $CH(CH_3)C_2H_5$ | $CH_2SC_6H_4$-4-Cl |
| $CH_3$ | $CH(CH_3)C_2H_5$ | $CH_2OC_6H_4$-4-Cl |
| $CH_3$ | $CH(CH_3)C_2H_5$ | $CH_2OC_6H_5$ |
| $C_2H_5$ | $CH(CH_3)C_2H_5$ | $CH_2COOCH_3$ |
| $C_2H_5$ | $CH(CH_3)C_2H_5$ | $CH_2COOC_2H_5$ |
| $C_2H_5$ | $CH(CH_3)C_2H_5$ | $CH_2COOC_3H_7$-iso |
| $C_2H_5$ | $CH(CH_3)C_2H_5$ | $CH(CH_3)COOCH_3$ |
| $C_2H_5$ | $CH(CH_3)C_2H_5$ | $CH(CH_3)COOC_2H_5$ |
| $C_2H_5$ | $CH(CH_3)C_2H_5$ | $CH_2CH_2COOCH_3$ |
| $C_2H_5$ | $CH(CH_3)C_2H_5$ | $CH_2CH_2COOC_2H_5$ |
| $C_2H_5$ | $CH(CH_3)C_2H_5$ | $CH_2CH_2COOC_3H_7$-iso |
| $C_2H_5$ | $CH(CH_3)C_2H_5$ | $CH(C_3H_7$-iso$)COOCH_3$ |
| $C_2H_5$ | $CH(CH_3)C_2H_5$ | $CH(C_3H_7$-iso$)COOC_2H_5$ |
| $C_2H_5$ | $CH(CH_3)C_2H_5$ | $CH_2CON(CH_3)_2$ |
| $C_2H_5$ | $CH(CH_3)C_2H_5$ | $CH_2CONHCH_3$ |
| $C_2H_5$ | $CH(CH_3)C_2H_5$ | $CH(CH_3)CONHCH_3$ |
| $C_2H_5$ | $CH(CH_3)C_2H_5$ | $CH(CH_3)CON(CH_3)_2$ |

**TABLE 2 (continued)**

| R | $R^1$ | $R^2$ |
|---|---|---|
| $C_2H_5$ | $CH(CH_3)C_2H_5$ | $CH_2CO$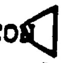 |
| $C_2H_5$ | $CH(CH_3)C_2H_5$ | $CH_2CO$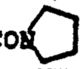 |
| $C_2H_5$ | $CH(CH_3)C_2H_5$ | $CH_2CO$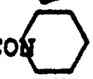 |
| $C_2H_5$ | $CH(CH_3)C_2H_5$ | $CH_2CO$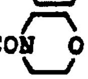 |
| $C_2H_5$ | $CH(CH_3)C_2H_5$ | $CH(CH_3)CO$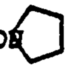 |
| $C_2H_5$ | $CH(CH_3)C_2H_5$ | $CH(CH_3)CO$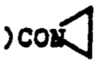 |
| $C_2H_5$ | $CH(CH_3)C_2H_5$ | $CH_2CH_2CONHCH_3$ |
| $C_2H_5$ | $CH(CH_3)C_2H_5$ | $CH_2CH_2CON(CH_3)_2$ |
| $C_2H_5$ | $CH(CH_3)C_2H_5$ | $CH_2CH_2CO$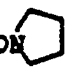 |
| $C_2H_5$ | $CH(CH_3)C_2H_5$ | $CH_2CH_2CO$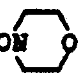 |
| $C_2H_5$ | $CH(CH_3)C_2H_5$ | $CH_2CH_2CON(C_2H_5)_2$ |
| $C_2H_5$ | $CH(CH_3)C_2H_5$ | $CH(CH_3)CON(C_2H_5)_2$ |
| $C_2H_5$ | $CH(CH_3)C_2H_5$ | $CH_2CH_2COOC_6H_5$ |
| $C_2H_5$ | $CH(CH_3)C_2H_5$ | $CH_2COOC_6H_5$ |
| $C_2H_5$ | $CH(CH_3)C_2H_5$ | $CH_2COOCH_2C_6H_5$ |
| $C_2H_5$ | $CH(CH_3)C_2H_5$ | $CH(CH_3)COOC_6H_5$ |
| $C_2H_5$ | $CH(CH_3)C_2H_5$ | $CH(CH_3)COOCH_2C_6H_5$ |
| $C_2H_5$ | $CH(CH_3)C_2H_5$ | $CH_2CN$ |
| $C_2H_5$ | $CH(CH_3)C_2H_5$ | $CH_2CF_3$ |
| $C_2H_5$ | $CH(CH_3)C_2H_5$ | $CH_2SCH_3$ |
| $C_2H_5$ | $CH(CH_3)C_2H_5$ | $CH_2SC_6H_5$ |
| $C_2H_5$ | $CH(CH_3)C_2H_5$ | $CH_2CH_2CH_2Cl$ |
| $C_2H_5$ | $CH(CH_3)C_2H_5$ | $CH_2OCH_3$ |
| $C_2H_5$ | $CH(CH_3)C_2H_5$ | $CH_2SC_6H_4$-4-F |
| $C_2H_5$ | $CH(CH_3)C_2H_5$ | $CH_2SC_6H_4$-4-Cl |
| $C_2H_5$ | $CH(CH_3)C_2H_5$ | $CH_2OC_6H_4$-4-Cl |
| $C_2H_5$ | $CH(CH_3)C_2H_5$ | $CH_2OC_6H_5$ |

TABLE 2 (continued)

| R | $R^1$ | $R^2$ |
|---|---|---|
| $CH_3$ | $CH_2CH(CH_3)_2$ | $CH_2COOCH_3$ |
| $CH_3$ | $CH_2CH(CH_3)_2$ | $CH_2COOC_2H_5$ |
| $CH_3$ | $CH_2CH(CH_3)_2$ | $CH_2COOC_3H_7$-iso |
| $CH_3$ | $CH_2CH(CH_3)_2$ | $CH(CH_3)COOCH_3$ |
| $CH_3$ | $CH_2CH(CH_3)_2$ | $CH(CH_3)COOC_2H_5$ |
| $CH_3$ | $CH_2CH(CH_3)_2$ | $CH_2CH_2COOCH_3$ |
| $CH_3$ | $CH_2CH(CH_3)_2$ | $CH_2CH_2COOC_2H_5$ |
| $CH_3$ | $CH_2CH(CH_3)_2$ | $CH_2CH_2COOC_3H_7$-iso |
| $CH_3$ | $CH_2CH(CH_3)_2$ | $CH(C_3H_7$-iso$)COOCH_3$ |
| $CH_3$ | $CH_2CH(CH_3)_2$ | $CH(C_3H_7$-iso$)COOC_2H_5$ |
| $CH_3$ | $CH_2CH(CH_3)_2$ | $CH_2CON(CH_3)_2$ |
| $CH_3$ | $CH_2CH(CH_3)_2$ | $CH_2CONHCH_3$ |
| $CH_3$ | $CH_2CH(CH_3)_2$ | $CH(CH_3)CONHCH_3$ |
| $CH_3$ | $CH_2CH(CH_3)_2$ | $CH(CH_3)CON(CH_3)_2$ |
| $CH_3$ | $CH_2CH(CH_3)_2$ | $CH_2CO$ 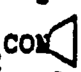 |
| $CH_3$ | $CH_2CH(CH_3)_2$ | $CH_2CO$ 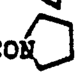 |
| $CH_3$ | $CH_2CH(CH_3)_2$ | $CH_2CO$ 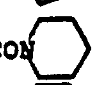 |
| $CH_3$ | $CH_2CH(CH_3)_2$ | $CH_2CO$ 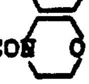 |
| $CH_3$ | $CH_2CH(CH_3)_2$ | $CH(CH_3)CO$ 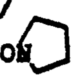 |
| $CH_3$ | $CH_2CH(CH_3)_2$ | $CH(CH_3)CO$ 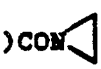 |
| $CH_3$ | $CH_2CH(CH_3)_2$ | $CH_2CH_2CONHCH_3$ |
| $CH_3$ | $CH_2CH(CH_3)_2$ | $CH_2CH_2CON(CH_3)_2$ |
| $CH_3$ | $CH_2CH(CH_3)_2$ | $CH_2CH_2CO$ 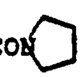 |
| $CH_3$ | $CH_2CH(CH_3)_2$ | $CH_2CH_2CO$ 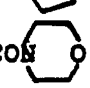 |

TABLE 2 (continued)

| R | $R^1$ | $R^2$ |
|---|---|---|
| $CH_3$ | $CH_2CH(CH_3)_2$ | $CH_2CH_2CON(C_2H_5)_2$ |
| $CH_3$ | $CH_2CH(CH_3)_2$ | $CH(CH_3)CON(C_2H_5)_2$ |
| $CH_3$ | $CH_2CH(CH_3)_2$ | $CH_2CH_2COOC_6H_5$ |
| $CH_3$ | $CH_2CH(CH_3)_2$ | $CH_2COOC_6H_5$ |
| $CH_3$ | $CH_2CH(CH_3)_2$ | $CH_2COOCH_2C_6H_5$ |
| $CH_3$ | $CH_2CH(CH_3)_2$ | $CH(CH_3)COOC_6H_5$ |
| $CH_3$ | $CH_2CH(CH_3)_2$ | $CH(CH_3)COOCH_2C_6H_5$ |
| $CH_3$ | $CH_2CH(CH_3)_2$ | $CH_2CN$ |
| $CH_3$ | $CH_2CH(CH_3)_2$ | $CH_2CF_3$ |
| $CH_3$ | $CH_2CH(CH_3)_2$ | $CH_2SCH_3$ |
| $CH_3$ | $CH_2CH(CH_3)_2$ | $CH_2SC_6H_5$ |
| $CH_3$ | $CH_2CH(CH_3)_2$ | $CH_2CH_2CH_2Cl$ |
| $CH_3$ | $CH_2CH(CH_3)_2$ | $CH_2OCH_3$ |
| $CH_3$ | $CH_2CH(CH_3)_2$ | $CH_2SC_6H_4$-4-F |
| $CH_3$ | $CH_2CH(CH_3)_2$ | $CH_2SC_6H_4$-4-Cl |
| $CH_3$ | $CH_2CH(CH_3)_2$ | $CH_2OC_6H_4$4-Cl |
| $CH_3$ | $CH_2CH(CH_3)_2$ | $CH_2OC_6H_5$ |
| $C_2H_5$ | $CH_2CH(CH_3)_2$ | $CH_2COOCH_3$ |
| $C_2H_5$ | $CH_2CH(CH_3)_2$ | $CH_2COOC_2H_5$ |
| $C_2H_5$ | $CH_2CH(CH_3)_2$ | $CH_2COOC_3H_7$-iso |
| $C_2H_5$ | $CH_2CH(CH_3)_2$ | $CH(CH_3)COOCH_3$ |
| $C_2H_5$ | $CH_2CH(CH_3)_2$ | $CH(CH_3)COOC_2H_5$ |
| $C_2H_5$ | $CH_2CH(CH_3)_2$ | $CH_2CH_2COOCH_3$ |
| $C_2H_5$ | $CH_2CH(CH_3)_2$ | $CH_2CH_2COOC_2H_5$ |
| $C_2H_5$ | $CH_2CH(CH_3)_2$ | $CH_2CH_2COOC_3H_7$-iso |
| $C_2H_5$ | $CH_2CH(CH_3)_2$ | $CH(C_3H_7$-iso$)COOCH_3$ |
| $C_2H_5$ | $CH_2CH(CH_3)_2$ | $CH(C_3H_7$-iso$)COOC_2H_5$ |
| $C_2H_5$ | $CH_2CH(CH_3)_2$ | $CH_2CON(CH_3)_2$ |
| $C_2H_5$ | $CH_2CH(CH_3)_2$ | $CH_2CONHCH_3$ |
| $C_2H_5$ | $CH_2CH(CH_3)_2$ | $CH(CH_3)CONHCH_3$ |
| $C_2H_5$ | $CH_2CH(CH_3)_2$ | $CH(CH_3)CON(CH_3)_2$ |

TABLE 2 (continued)

| R | $R^1$ | $R^2$ |
|---|---|---|
| $C_2H_5$ | $CH_2CH(CH_3)_2$ | $CH_2CON$ 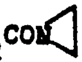 |
| $C_2H_5$ | $CH_2CH(CH_3)_2$ | $CH_2CON$ 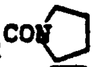 |
| $C_2H_5$ | $CH_2CH(CH_3)_2$ | $CH_2CON$ 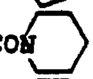 |
| $C_2H_5$ | $CH_2CH(CH_3)_2$ | $CH_2CON$ 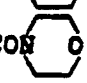 |
| $C_2H_5$ | $CH_2CH(CH_3)_2$ | $CH(CH_3)CON$ 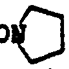 |
| $C_2H_5$ | $CH_2CH(CH_3)_2$ | $CH(CH_3)CON$ 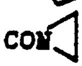 |
| $C_2H_5$ | $CH_2CH(CH_3)_2$ | $CH_2CH_2CONHCH_3$ |
| $C_2H_5$ | $CH_2CH(CH_3)_2$ | $CH_2CH_2CON(CH_3)_2$ |
| $C_2H_5$ | $CH_2CH(CH_3)_2$ | $CH_2CH_2CON$ 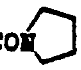 |
| $C_2H_5$ | $CH_2CH(CH_3)_2$ | $CH_2CH_2CON$ 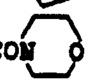 |
| $C_2H_5$ | $CH_2CH(CH_3)_2$ | $CH_2CH_2CON(C_2H_5)_2$ |
| $C_2H_5$ | $CH_2CH(CH_3)_2$ | $CH(CH_3)CON(C_2H_5)_2$ |
| $C_2H_5$ | $CH_2CH(CH_3)_2$ | $CH_2CH_2COOC_6H_5$ |
| $C_2H_5$ | $CH_2CH(CH_3)_2$ | $CH_2COOC_6H_5$ |
| $C_2H_5$ | $CH_2CH(CH_3)_2$ | $CH_2COOCH_2C_6H_5$ |
| $C_2H_5$ | $CH_2CH(CH_3)_2$ | $CH(CH_3)COOC_6H_5$ |
| $C_2H_5$ | $CH_2CH(CH_3)_2$ | $CH(CH_3)COOCH_2C_6H_5$ |
| $C_2H_5$ | $CH_2CH(CH_3)_2$ | $CH_2CN$ |
| $C_2H_5$ | $CH_2CH(CH_3)_2$ | $CH_2CF_3$ |
| $C_2H_5$ | $CH_2CH(CH_3)_2$ | $CH_2SCH_3$ |
| $C_2H_5$ | $CH_2CH(CH_3)_2$ | $CH_2SC_6H_5$ |
| $C_2H_5$ | $CH_2CH(CH_3)_2$ | $CH_2CH_2CH_2Cl$ |
| $C_2H_5$ | $CH_2CH(CH_3)_2$ | $CH_2OCH_3$ |
| $C_2H_5$ | $CH_2CH(CH_3)_2$ | $CH_2SC_6H_4$-4-F |
| $C_2H_5$ | $CH_2CH(CH_3)_2$ | $CH_2SC_6H_4$-4-Cl |
| $C_2H_5$ | $CH_2CH(CH_3)_2$ | $CH_2OC_6H_4$-4-Cl |
| $C_2H_5$ | $CH_2CH(CH_3)_2$ | $CH_2OC_6H_5$ |

TABLE 2 (continued)

| R | $R^1$ | $R^2$ |
|---|---|---|
| $CH_3$ | $C(CH_3)_3$ | $CH_2COOCH_3$ |
| $CH_3$ | $C(CH_3)_3$ | $CH_2COOC_2H_5$ |
| $CH_3$ | $C(CH_3)_3$ | $CH_2COOC_3H_7$-iso |
| $CH_3$ | $C(CH_3)_3$ | $CH(CH_3)COOCH_3$ |
| $CH_3$ | $C(CH_3)_3$ | $CH(CH_3)COOC_2H_5$ |
| $CH_3$ | $C(CH_3)_3$ | $CH_2CH_2COOCH_3$ |
| $CH_3$ | $C(CH_3)_3$ | $CH_2CH_2COOC_2H_5$ |
| $CH_3$ | $C(CH_3)_3$ | $CH_2CH_2COOC_3H_7$-iso |
| $CH_3$ | $C(CH_3)_3$ | $CH(C_3H_7$-iso$)COOCH_3$ |
| $CH_3$ | $C(CH_3)_3$ | $CH(C_3H_7$-iso$)COOC_2H_5$ |
| $CH_3$ | $C(CH_3)_3$ | $CH_2CON(CH_3)_2$ |
| $CH_3$ | $C(CH_3)_3$ | $CH_2CONHCH_3$ |
| $CH_3$ | $C(CH_3)_3$ | $CH(CH_3)CONHCH_3$ |
| $CH_3$ | $C(CH_3)_3$ | $CH(CH_3)CON(CH_3)_2$ |
| $CH_3$ | $C(CH_3)_3$ | $CH_2CON$ 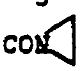 |
| $CH_3$ | $C(CH_3)_3$ | $CH_2CON$ 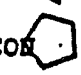 |
| $CH_3$ | $C(CH_3)_3$ | $CH_2CON$ 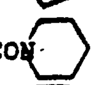 |
| $CH_3$ | $C(CH_3)_3$ | $CH_2CON$ 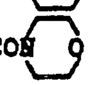 |
| $CH_3$ | $C(CH_3)_3$ | $CH(CH_3)CON$ 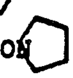 |
| $CH_3$ | $C(CH_3)_3$ | $CH(CH_3)CON$ 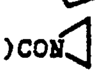 |
| $CH_3$ | $C(CH_3)_3$ | $CH_2CH_2CONHCH_3$ |
| $CH_3$ | $C(CH_3)_3$ | $CH_2CH_2CON(CH_3)_2$ |
| $CH_3$ | $C(CH_3)_3$ | $CH_2CH_2CON$ 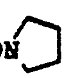 |
| $CH_3$ | $C(CH_3)_3$ | $CH_2CH_2CON$ 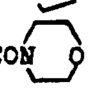 |

TABLE 2 (continued)

| R | $R^1$ | $R^2$ |
|---|---|---|
| $CH_3$ | $C(CH_3)_3$ | $CH_2CH_2CON(C_2H_5)_2$ |
| $CH_3$ | $C(CH_3)_3$ | $CH(CH_3)CON(C_2H_5)_2$ |
| $CH_3$ | $C(CH_3)_3$ | $CH_2CH_2COOC_6H_5$ |
| $CH_3$ | $C(CH_3)_3$ | $CH_2COOC_6H_5$ |
| $CH_3$ | $C(CH_3)_3$ | $CH_2COOCH_2C_6H_5$ |
| $CH_3$ | $C(CH_3)_3$ | $CH(CH_3)COOC_6H_5$ |
| $CH_3$ | $C(CH_3)_3$ | $CH(CH_3)COOCH_2C_6H_5$ |
| $CH_3$ | $C(CH_3)_3$ | $CH_2CN$ |
| $CH_3$ | $C(CH_3)_3$ | $CH_2CF_3$ |
| $CH_3$ | $C(CH_3)_3$ | $CH_2SCH_3$ |
| $CH_3$ | $C(CH_3)_3$ | $CH_2SC_6H_5$ |
| $CH_3$ | $C(CH_3)_3$ | $CH_2CH_2CH_2Cl$ |
| $CH_3$ | $C(CH_3)_3$ | $CH_2OCH_3$ |
| $CH_3$ | $C(CH_3)_3$ | $CH_2SC_6H_4$-4-F |
| $CH_3$ | $C(CH_3)_3$ | $CH_2SC_6H_4$-4-Cl |
| $CH_3$ | $C(CH_3)_3$ | $CH_2OC_6H_4$4-Cl |
| $CH_3$ | $C(CH_3)_3$ | $CH_2OC_6H_5$ |
| $C_2H_5$ | $C(CH_3)_3$ | $CH_2COOCH_3$ |
| $C_2H_5$ | $C(CH_3)_3$ | $CH_2COOC_2H_5$ |
| $C_2H_5$ | $C(CH_3)_3$ | $CH_2COOC_3H_7$-iso |
| $C_2H_5$ | $C(CH_3)_3$ | $CH(CH_3)COOCH_3$ |
| $C_2H_5$ | $C(CH_3)_3$ | $CH(CH_3)COOC_2H_5$ |
| $C_2H_5$ | $C(CH_3)_3$ | $CH_2CH_2COOCH_3$ |
| $C_2H_5$ | $C(CH_3)_3$ | $CH_2CH_2COOC_2H_5$ |
| $C_2H_5$ | $C(CH_3)_3$ | $CH_2CH_2COOC_3H_7$-iso |
| $C_2H_5$ | $C(CH_3)_3$ | $CH(C_3H_7$-iso$)COOCH_3$ |
| $C_2H_5$ | $C(CH_3)_3$ | $CH(C_3H_7$-iso$)COOC_2H_5$ |
| $C_2H_5$ | $C(CH_3)_3$ | $CH_2CON(CH_3)_2$ |
| $C_2H_5$ | $C(CH_3)_3$ | $CH_2CONHCH_3$ |
| $C_2H_5$ | $C(CH_3)_3$ | $CH(CH_3)CONHCH_3$ |
| $C_2H_5$ | $C(CH_3)_3$ | $CH(CH_3)CON(CH_3)_2$ |

**TABLE 2 (continued)**

| R | $R^1$ | $R^2$ |
|---|---|---|
| $C_2H_5$ | $C(CH_3)_3$ | $CH_2CO$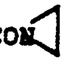 |
| $C_2H_5$ | $C(CH_3)_3$ | $CH_2CO$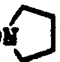 |
| $C_2H_5$ | $C(CH_3)_3$ | $CH_2CO$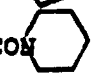 |
| $C_2H_5$ | $C(CH_3)_3$ | $CH_2CO$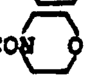 |
| $C_2H_5$ | $C(CH_3)_3$ | $CH(CH_3)CO$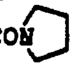 |
| $C_2H_5$ | $C(CH_3)_3$ | $CH(CH_3)CO$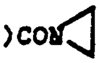 |
| $C_2H_5$ | $C(CH_3)_3$ | $CH_2CH_2CONHCH_3$ |
| $C_2H_5$ | $C(CH_3)_3$ | $CH_2CH_2CON(CH_3)_2$ |
| $C_2H_5$ | $C(CH_3)_3$ | $CH_2CH_2CO$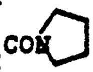 |
| $C_2H_5$ | $C(CH_3)_3$ | $CH_2CH_2CO$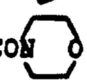 |
| $C_2H_5$ | $C(CH_3)_3$ | $CH_2CH_2CON(C_2H_5)_2$ |
| $C_2H_5$ | $C(CH_3)_3$ | $CH(CH_3)CON(C_2H_5)_2$ |
| $C_2H_5$ | $C(CH_3)_3$ | $CH_2CH_2COOC_6H_5$ |
| $C_2H_5$ | $C(CH_3)_3$ | $CH_2COOC_6H_5$ |
| $C_2H_5$ | $C(CH_3)_3$ | $CH_2COOCH_2C_6H_5$ |
| $C_2H_5$ | $C(CH_3)_3$ | $CH(CH_3)COOC_6H_5$ |
| $C_2H_5$ | $C(CH_3)_3$ | $CH(CH_3)COOCH_2C_6H_5$ |
| $C_2H_5$ | $C(CH_3)_3$ | $CH_2CN$ |
| $C_2H_5$ | $C(CH_3)_3$ | $CH_2CF_3$ |
| $C_2H_5$ | $C(CH_3)_3$ | $CH_2SCH_3$ |
| $C_2H_5$ | $C(CH_3)_3$ | $CH_2SC_6H_5$ |
| $C_2H_5$ | $C(CH_3)_3$ | $CH_2CH_2CH_2Cl$ |
| $C_2H_5$ | $C(CH_3)_3$ | $CH_2OCH_3$ |
| $C_2H_5$ | $C(CH_3)_3$ | $CH_2SC_6H_4$-4-F |
| $C_2H_5$ | $C(CH_3)_3$ | $CH_2SC_6H_4$-4-Cl |
| $C_2H_5$ | $C(CH_3)_3$ | $CH_2OC_6H_4$-4-Cl |
| $C_2H_5$ | $C(CH_3)_3$ | $CH_2OC_6H_5$ |

TABLE 2 (continued)

| R | $R^1$ | $R^2$ |
|---|---|---|
| $CH_3$ | $CH_2C_6H_5$ | $CH_2COOCH_3$ |
| $CH_3$ | $CH_2C_6H_5$ | $CH_2COOC_2H_5$ |
| $CH_3$ | $CH_2C_6H_5$ | $CH_2COOC_3H_7$-iso |
| $CH_3$ | $CH_2C_6H_5$ | $CH(CH_3)COOCH_3$ |
| $CH_3$ | $CH_2C_6H_5$ | $CH(CH_3)COOC_2H_5$ |
| $CH_3$ | $CH_2C_6H_5$ | $CH_2CH_2COOCH_3$ |
| $CH_3$ | $CH_2C_6H_5$ | $CH_2CH_2COOC_2H_5$ |
| $CH_3$ | $CH_2C_6H_5$ | $CH_2CH_2COOC_3H_7$-iso |
| $CH_3$ | $CH_2C_6H_5$ | $CH(C_3H_7$-iso$)COOCH_3$ |
| $CH_3$ | $CH_2C_6H_5$ | $CH(C_3H_7$-iso$)COOC_2H_5$ |
| $CH_3$ | $CH_2C_6H_5$ | $CH_2CON(CH_3)_2$ |
| $CH_3$ | $CH_2C_6H_5$ | $CH_2CONHCH_3$ |
| $CH_3$ | $CH_2C_6H_5$ | $CH(CH_3)CONHCH_3$ |
| $CH_3$ | $CH_2C_6H_5$ | $CH(CH_3)CON(CH_3)_2$ |
| $CH_3$ | $CH_2C_6H_5$ | $CH_2CO$ 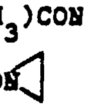 |
| $CH_3$ | $CH_2C_6H_5$ | $CH_2CO$ 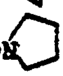 |
| $CH_3$ | $CH_2C_6H_5$ | $CH_2CO$ 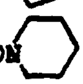 |
| $CH_3$ | $CH_2C_6H_5$ | $CH_2CO$ 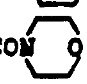 |
| $CH_3$ | $CH_2C_6H_5$ | $CH(CH_3)CO$ 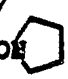 |
| $CH_3$ | $CH_2C_6H_5$ | $CH(CH_3)CO$ 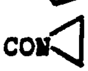 |
| $CH_3$ | $CH_2C_6H_5$ | $CH_2CH_2CONHCH_3$ |
| $CH_3$ | $CH_2C_6H_5$ | $CH_2CH_2CON(CH_3)_2$ |
| $CH_3$ | $CH_2C_6H_5$ | $CH_2CH_2CO$ 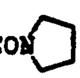 |
| $CH_3$ | $CH_2C_6H_5$ | $CH_2CH_2CO$ 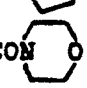 |

TABLE 2 (continued)

| R | $R^1$ | $R^2$ |
|---|---|---|
| $CH_3$ | $CH_2C_6H_5$ | $CH_2CH_2CON(C_2H_5)_2$ |
| $CH_3$ | $CH_2C_6H_5$ | $CH(CH_3)CON(C_2H_5)_2$ |
| $CH_3$ | $CH_2C_6H_5$ | $CH_2CH_2COOC_6H_5$ |
| $CH_3$ | $CH_2C_6H_5$ | $CH_2COOC_6H_5$ |
| $CH_3$ | $CH_2C_6H_5$ | $CH_2COOCH_2C_6H_5$ |
| $CH_3$ | $CH_2C_6H_5$ | $CH(CH_3)COOC_6H_5$ |
| $CH_3$ | $CH_2C_6H_5$ | $CH(CH_3)COOCH_2C_6H_5$ |
| $CH_3$ | $CH_2C_6H_5$ | $CH_2CN$ |
| $CH_3$ | $CH_2C_6H_5$ | $CH_2CF_3$ |
| $CH_3$ | $CH_2C_6H_5$ | $CH_2SCH_3$ |
| $CH_3$ | $CH_2C_6H_5$ | $CH_2SC_6H_5$ |
| $CH_3$ | $CH_2C_6H_5$ | $CH_2CH_2CH_2Cl$ |
| $CH_3$ | $CH_2C_6H_5$ | $CH_2OCH_3$ |
| $CH_3$ | $CH_2C_6H_5$ | $CH_2SC_6H_4$-4-F |
| $CH_3$ | $CH_2C_6H_5$ | $CH_2SC_6H_4$-4-Cl |
| $CH_3$ | $CH_2C_6H_5$ | $CH_2OC_6H_4$4-Cl |
| $CH_3$ | $CH_2C_6H_5$ | $CH_2OC_6H_5$ |
| $C_2H_5$ | $CH_2C_6H_5$ | $CH_2COOCH_3$ |
| $C_2H_5$ | $CH_2C_6H_5$ | $CH_2COOC_2H_5$ |
| $C_2H_5$ | $CH_2C_6H_5$ | $CH_2COOC_3H_7$-iso |
| $C_2H_5$ | $CH_2C_6H_5$ | $CH(CH_3)COOCH_3$ |
| $C_2H_5$ | $CH_2C_6H_5$ | $CH(CH_3)COOC_2H_5$ |
| $C_2H_5$ | $CH_2C_6H_5$ | $CH_2CH_2COOCH_3$ |
| $C_2H_5$ | $CH_2C_6H_5$ | $CH_2CH_2COOC_2H_5$ |
| $C_2H_5$ | $CH_2C_6H_5$ | $CH_2CH_2COOC_3H_7$-iso |
| $C_2H_5$ | $CH_2C_6H_5$ | $CH(C_3H_7$-iso$)COOCH_3$ |
| $C_2H_5$ | $CH_2C_6H_5$ | $CH(C_3H_7$-iso$)COOC_2H_5$ |
| $C_2H_5$ | $CH_2C_6H_5$ | $CH_2CON(CH_3)_2$ |
| $C_2H_5$ | $CH_2C_6H_5$ | $CH_2CONHCH_3$ |
| $C_2H_5$ | $CH_2C_6H_5$ | $CH(CH_3)CONHCH_3$ |
| $C_2H_5$ | $CH_2C_6H_5$ | $CH(CH_3)CON(CH_3)_2$ |

TABLE 2 (continued)

| R | $R^1$ | $R^2$ |
|---|---|---|
| $C_2H_5$ | $CH_2C_6H_5$ | $CH_2CO$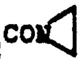 |
| $C_2H_5$ | $CH_2C_6H_5$ | $CH_2CO$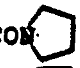 |
| $C_2H_5$ | $CH_2C_6H_5$ | $CH_2CO$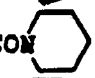 |
| $C_2H_5$ | $CH_2C_6H_5$ | $CH_2CO$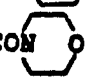 |
| $C_2H_5$ | $CH_2C_6H_5$ | $CH(CH_3)CO$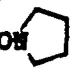 |
| $C_2H_5$ | $CH_2C_6H_5$ | $CH(CH_3)CO$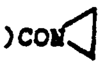 |
| $C_2H_5$ | $CH_2C_6H_5$ | $CH_2CH_2CONHCH_3$ |
| $C_2H_5$ | $CH_2C_6H_5$ | $CH_2CH_2CON(CH_3)_2$ |
| $C_2H_5$ | $CH_2C_6H_5$ | $CH_2CH_2CO$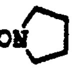 |
| $C_2H_5$ | $CH_2C_6H_5$ | $CH_2CH_2CO$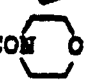 |
| $C_2H_5$ | $CH_2C_6H_5$ | $CH_2CH_2CON(C_2H_5)_2$ |
| $C_2H_5$ | $CH_2C_6H_5$ | $CH(CH_3)CON(C_2H_5)_2$ |
| $C_2H_5$ | $CH_2C_6H_5$ | $CH_2CH_2COOC_6H_5$ |
| $C_2H_5$ | $CH_2C_6H_5$ | $CH_2COOC_6H_5$ |
| $C_2H_5$ | $CH_2C_6H_5$ | $CH_2COOCH_2C_6H_5$ |
| $C_2H_5$ | $CH_2C_6H_5$ | $CH(CH_3)COOC_6H_5$ |
| $C_2H_5$ | $CH_2C_6H_5$ | $CH(CH_3)COOCH_2C_6H_5$ |
| $C_2H_5$ | $CH_2C_6H_5$ | $CH_2CN$ |
| $C_2H_5$ | $CH_2C_6H_5$ | $CH_2CF_3$ |
| $C_2H_5$ | $CH_2C_6H_5$ | $CH_2SCH_3$ |
| $C_2H_5$ | $CH_2C_6H_5$ | $CH_2SC_6H_5$ |
| $C_2H_5$ | $CH_2C_6H_5$ | $CH_2CH_2CH_2Cl$ |
| $C_2H_5$ | $CH_2C_6H_5$ | $CH_2OCH_3$ |
| $C_2H_5$ | $CH_2C_6H_5$ | $CH_2SC_6H_4$-4-F |
| $C_2H_5$ | $CH_2C_6H_5$ | $CH_2SC_6H_4$-4-Cl |
| $C_2H_5$ | $CH_2C_6H_5$ | $CH_2OC_6H_4$-4-Cl |
| $C_2H_5$ | $CH_2C_6H_5$ | $CH_2OC_6H_5$ |

TABLE 2 (continued)

| R | $R^1$ | $R^2$ |
|---|---|---|
| $CH{=}CH_2$ | $C_3H_7$ | $CH_2COOCH_3$ |
| $CH{=}CH_2$ | $C_3H_7$ | $CH_2COOC_3H_5$ |
| $CH{=}CH_2$ | $C_3H_7$ | $CH_2COOC_3H_7$-iso |
| $C{\equiv}CH$ | $C_3H_7$ | $CH(CH_3COOCH_3$ |
| $C{\equiv}CH$ | $C_3H_7$ | $CH(CH_3)COOC_2H_5$ |
| $C{\equiv}CH$ | $C_3H_7$ | $CH_2CH_2COOCH_3$ |
| Ph | $C_3H_7$ | $CH_2CH_2COOC_2H_5$ |
| Ph | $C_3H_7$ | $CH_2CH_2COOC_3H_7$-iso |
| Ph | $C_3H_7$ | $CH(C_3H_7$-iso$)COOCH_3$ |
| Ph | $C_3H_7$ | $CH(C_3H_7$-iso$)COOC_2H_5$ |
| 4-F-Ph | $C_3H_7$ | $CH_2CON(CH_3)_2$ |
| 4-F-Ph | $C_3H_7$ | $CH_2CONHCH_3$ |
| 4-F-Ph | $C_3H_7$ | $CH(CH_3)CONHCH_3$ |
| $CH_3$ | $CH_2$-(4-Cl-Ph) | $CH_2CON$ 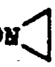 |
| $CH_3$ | $CH_2$-(4-F-Ph) | $CH_2CO$ 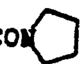 |
| $CH_3$ | $CH_2(CH_2)_3-CH_3$ | $CH_2CO$ 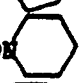 |
| $CH_3$ | $CH_2(CH_2)_3-CH_3$ | $CH_2CO$ 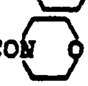 |
| $CH_3$ | $CH_2(CH_2)_3-CH_3$ | $CH(CH_3)CO$ 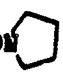 |
| $CH_3$ | $CH_2(CH_2)_3-CH_3$ | $CH(CH_3)CO$ 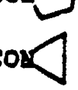 |
| $CH_3$ | $CH_2(CH_2)_3-CH_3$ | $CH_2CH_2CONHCH_3$ |
| $CH_3$ | $CH_2(CH_2)_3-CH_3$ | $CH_2CH_2CON(CH_3)_2$ |
| $CH_3$ | $C_3H_7$ | $CH_2COOCH_2(CH_2)_3CH_3$ |
| $CH_3$ | $C_3H_7$ | $CH_2COOCH_2(CH_2)_4CH_3$ |
| $CH_3$ | $C_3H_7$ | $CH_2COOCH_2CH_2F$ |
| $CH_3$ | $C_3H_7$ | $CH(CH_3)COOCH_2-CHF-CH_2Cl$ |
| $CH_3$ | $C_3H_7$ | $CH(CH_3)COOCH_2-CF_2H$ |
| $CH_3$ | $C_3H_7$ | $CH_2CH_2COOCH_2-OCH_3$ |
| $CH_3$ | $C_3H_7$ | $CH_2CH_2COOCH_2-CH_2-OCH_3$ |
| $CH_3$ | $C_3H_7$ | $CH_2CH_2COOCH_2CH_2-SCH_3$ |
| $CH_3$ | $C_3H_7$ | $CH(C_3H_7$-iso$)COOCH_2CH_2-CN$ |

Utility

The compounds of the present invention exhibit activity against a wide spectrum of foliar and soil inhabiting insects and mites. They also control several root colonizing soil nematode species. Further, the compounds of the invention act in a systemic fashion. Those skilled in the art will recognize that all compounds may not be effective equally against all insects or mites. Compounds of this invention control many of the economically important species of the insect orders Coleoptera, Homoptera and Hemiptera among many others, as well as important mite species of the order Acari. The specific species for which control is exemplified hereafter, are: Southern corn rootworm, Diabratica undecimpunctata howardi, Green Peach aphid, Myzus persicae, and the two-spotted spider mite, Tetranychus urticae. The pest control afforded by the compounds of the present invention is not limited, however, to these species.

Formulation and Use

The compounds of this invention will generally be used in formulation with a liquid or solid diluent or with an organic solvent carrier. Useful formulations of the compounds of Formula I can be prepared in conventional ways. They include dusts, granules, pellets, solutions, suspensions, emulsions, wettable powders, emulsifiable concentrates and the like. Many of these may be applied directly. Sprayable formulations can be extended in suitable media and used at spray volumes of from about one to several hundred liters per hectare. High strength compositions are primarily used as intermediates for further formulation. The formulations, broadly, contain about 1% to 99% by weight of active ingredient(s) and at least one of a) about 0.1% to 20% surfactant(s) and b) about 5% to 99% solid or liquid diluent(s). More specifically, they will contain these ingredients in the following approximate proportions:

| | Percent by Weight | | |
|---|---|---|---|
| | Active Ingredient | Diluent(s) | Surfactant(s) |
| Wettable Powders | 5-50 | 50-95 | 1-10 |
| Oil Suspensions, Emulsions, Solutions, (including Emulsifiable Concentrates) | 5-90 | 10-95 | 0-25 |
| Dusts | 1-25 | 70-99 | 0-5 |
| Granules and Pellets | 0.5-95 | 5-99 | 0-15 |
| High Strength Compositions | 90-99 | 0-10 | 0-2 |

Lower or higher levels of active ingredient can, of course, be present depending on the intended use and the physical properties of the compound. Higher ratios of surfactant to active ingredient are sometimes desirable, and are achieved by incorporation into the formulation or by tank mixing.

Typical solid diluents are described in Watkins, et al., "Handbook of Insecticide Dust Diluents and Carriers", 2nd Ed., Dorland Books, Caldwell, New Jersey. The more absorptive diluents are preferred for wettable powders and the denser ones for dusts. Typical liquid diluents and solvents are described in Marsden, "Solvents Guide," 2nd Ed., Interscience, New York, 1950. Solubility under 0.1% is preferred for suspension concentrates; solution concentrates are preferably stable against phase separation at 0° C. "McCutcheon's Detergents and Emulsifiers Annual", Allured Publ. Corp., Ridgewood, New Jersey, as well as Sisely and Wood, "Encyclopedia of Surface Active Agents", Chemical Publ. Co., Inc., New York, 1964, list surfactants and recommended uses. All formulations can contain minor amounts of additives to reduce foam, caking, corrosion, microbiological growth, etc. Preferably, ingredients should be approved by the U.S. Environmental Protection Agency for the use intended.

The methods of making such compositions are well known. Solutions are prepared by simply mixing the ingredients. Fine solid compositions are made by blending and, usually, grinding as in a hammer or fluid energy mill. Suspensions are prepared by wet milling (see, for example, Littler, U.S. Patent 3,060,084). Granules and pellets may be made by spraying the active material upon preformed granular carriers or by agglomeration techniques. See J. E. Browning, "Agglomeration", Chemical Engineering, December 4, 1967, pages 147 and following, and "Perry's Chemical Engineer"s Handbook", 4th Ed., McGraw-Hill, New York, 1963, pages 8 to 59 and following.

Examples of useful formulations of compounds of the present invention are as follows:

## Example 12

| Emulsifiable Concentrate | |
|---|---|
| S-(1-methylpropyl)-N-(1-ethoxycarbonylethyl)-N-formyl-P-methylphosphonamidothioate | 30% |
| blend of oil soluble sulfonates and polyoxyethylene ethers | 4% |
| xylene | 66% |

The ingredients are combined and stirred with gentle warming to speed solution. A fine screen filter is included in packaging operation to insure the absence of any extraneous undissolved material in the product.

## Example 13

| Wettable Powder | |
|---|---|
| S-(1-methylpropyl)-N-(i-propoxycarbonylmethyl)-N-formyl-P-methylphosphonamidothioate | 25% |
| sodium alkylnaphthalenesulfonate | 2% |
| sodium ligninsulfonate | 2% |
| synthetic amorphous silica | 3% |
| kaolinite | 68% |

The active ingredient, warmed to reduce viscosity, is sprayed onto the inert materials in a blender. After grinding in a hammer-mill, the material is reblended and sifted through a 50 mesh screen.

## Example 14

| Dust | |
|---|---|
| Wettable powder of Example 13 | 10% |
| pyrophyllite (powder) | 90% |

The wettable powder and the pyrophyllite diluent are thoroughly blended and then packaged. The product is suitable for use as a dust.

Example 15

| Granule | |
|---|---|
| S-(1-methylpropyl)-N-(1-ethoxycarbonylethyl)-N-formyl-P-methylphosponamidothioate | 15% |
| attapulgite granules (low volative matter, 0.71 0.30 mm; U.S.S. No. 25-50 sieves) | 85% |

The active ingredient is warmed to reduce viscosity and sprayed upon dedusted and pre-warmed attapulgite granules in a double cone blender. The granules are then allowed to cool and are packaged.

Example 16

| Granule | |
|---|---|
| Wettable powder of Example 15 | 15% |
| gypsum | 69% |
| potassium sulfate | 16% |

The ingredients are blended in a rotating mixer and water sprayed on to accomplish granulation. When most of the material has reached the desired range of 0.1 to 0.42 mm (U.S.S. No. 18 to 40 sieves), the granules are removed, dried, and screened. Oversize material is crushed to produce additional material in the desired range. These granules contain 3.75% active ingredient.

Example 17

| Solution | |
|---|---|
| S-(1-methylpropyl)-N-(1-ethoxycarbonylethyl)-N-formyl-P-methylphosphonamidothioate | 50% |
| isophorone | 50% |

The ingredients are combined and stirred to produce a solution suitable for direct, low volume application.

Compounds of Formula I can also be mixed with other insecticides, fungicides, nematicides, bactericides, acaricides, or other biologically active compounds to achieve an even broader spectrum of effective agricultural protection. Examples of agricultural protectants with which compounds of the present invention can be mixed or formulated are:

Insecticides:

3-hydroxy-N-methylcrotonamide(dimethylphosphate)ester (monocrotophos)
methylcarbamic acid, ester with 2,3-dihydro-2,2-dimethyl-7-benzofuranol (carbofuran)
O-[2,4,5-trichloro-α-(chloromethyl)benzyl]phosphoric acid, O′,O′-dimethyl ester (tetrachlorvinphos)
2-mercaptosuccinic acid, diethyl ester, S-ester with thionophosphoric acid, dimethyl ester (malathion)
phosphorothioic acid, O,O-dimethyl, O-p-nitrophenyl ester (methyl parathion)
methylcarbamic acid, ester with α-naphthol (carbaryl)
methyl O-(methylcarbamoyl)thiolacetohydroxamate (methomyl)
N′-(4-chloro-o-tolyl)-N,N-dimethylformamidine (chlordimeform)
O,O-diethyl-O-(2-isopropyl-4-methyl-6-pyrimidylphosphorothioate (diazinon)
octachlorocamphene (toxaphene)
O-ethyl O-p-nitrophenyl phenylphosphonothioate (EPN)
(S)-α-cyano-m-phenoxybenzyl(1R,3R)-3-(2,2-dibromovinyl)-2,2-dimethylcyclopropanecarboxylate (deltamethrin)
Methyl N′,N′-dimethyl-N-[(methylcarbamoyl)oxy]-1-thiooxaminidate (oxamyl)
cyano(3-phenoxyphenyl)-methyl-4-chloro-α-(1-methylethyl)benzeneacetate (fenvalerate)
(3-phenoxyphenyl)methyl(±)-cis,trans-3-(2,2-dichloroethenyl)-2,2-dimethylcyclopropanecarboxylate (permethrin)
α-cyano-3-phenoxybenzyl 3-(2,2-dichlorovinyl)-2,2-dimethylcyclopropane carboxylate (cypermethrin)
O-ethyl-S-(p-chlorophenyl)ethylphosphonodithioate (profenphos)
phosphorothiolothionic acid, O-ethyl-O-[4-(methylthio)phenyl]-S-n-propyl ester (sulprofos).

Fungicides:

methyl 2-benzimidazolecarbamate (carbendazim)
tetramethylthiuram disulfide (thiuram)
n-dodecylguanidine acetate (dodine)
manganese ethylenebisdithiocarbamate (maneb)
1,4-dichloro-2,5-dimethoxybenzene (chloroneb)
methyl 1-(butylcarbamoyl)-2-benzimidazolecarbamate (benomyl)
1-[2-(2,4-dichlorophenyl)-4-propyl-1,3-dioxolan-2-ylmethyl]-1H-1,2,4-triazole (propiconazole)
2-cyano-N-ethylcarbamoyl-2-methoxyiminoacetamide (cymoxanil)
1-(4-chlorophenoxy)-3,3-dimethyl-1-(1H-1,2,4-triazol-1-yl)-2-butanone (triadimefon)
N-(trichloromethylthio)tetrahydrophthalimide (captan)
N-(trichloromethylthio)phthalimide (folpet)
1-[[[bis(4-fluorophenyl)][methyl]silyl]methyl]-1H-1,2,4-triazole.

Nematocides:

S-methyl 1-(dimethylcarbamoyl)-N-(methylcarbamoyloxy)thioformimidate
S-methyl 1-carbamoyl-N-(methylcarbamoyloxy)thioformimidate
N-isopropylphosphoramidic acid, O-ethyl O′-[4-(methylthio)-m-tolyl]diester (fenamiphos).

Bactericides:

tribasic copper sulfate
streptomycin sulfate.

Acaricides:

senecioic acid, ester with 2-sec-butyl-4,6-dinitrophenol (binapacryl)
6-methyl-1,3-dithiolo[4,5-β]quinoxalin-2-one (oxythioquinox)
ethyl 4,4′-dichlorobenzilate (chlorobenzilate)
1,1-bis(p-chlorophenyl)-2,2,2-trichloroethanol (dicofol)
bis(pentachloro-2,4-cyclopentadien-1-yl) (dienochlor)

tricyclohexyltin hydroxide (cyhexatin)
trans-5-(4-chlorophenyl)-N-cyclohexyl-4-methyl-2-oxothiazolidine-3-carboxamide (hexythiazox).

## Application

Insects and mites are controlled and agricultural crops protected by applying to the pests or to their environment an effective amount of a compound of Formula I as part of a formulation. The compound is normally applied to the locus of infestation or to the area to be protected or directly on the pests to be controlled. The preferred methods of application use granular equipment that distributes the compound on or in the soil, or to the plant part that is infested or needs to be protected. Granular formulations of these compounds can be applied to or, optionally, incorporated into the soil. Either aerial or ground application can be used.

As mentioned, the compounds can be applied in their pure state, but most often applications will be of a formulation containing one or more of the compounds of this invention. The most preferred method of application involves applying the formulated compounds to the soil for the purpose of controlling soil-borne pests and/or to be taken up by the plant in a systemic fashion to control foliar pests.

The rate of application of Formula I compounds required for effective control will depend on such factors as the species of insect, mite or nematode to be controlled, the pest's life stage, its size, its location, the host crop, time of year of application, ambient moisture, temperature conditions, and the like. In general, application rates of 0.5 to 2 kg of active ingredient per hectare are sufficient to provide effective control in large scale field operations under normal circumstances, but as little as 0.01 kg/hectare may be sufficient or as much as 8 kg/hectare may be required, depending upon the factors listed above.

The following Examples demonstrate the control efficacy of compounds of Formula I on specific insect, mites and nematode pests wherein Compound 1 is the compound of Example 1, Compound 2 is the compound of Example 2, Compound 3 is the compound of Example 3, and so on. The compounds listed showed greater than 80% control in the corresponding Examples. Compounds not listed were either not tested or were less active.

## Example 18

### Southern Corn Rootworm

Test units, each consisting of an 8-ounce plastic cup containing 1 sprouted corn seed, were prepared. The test units were sprayed with solutions of each of the below listed test compounds (acetone/distilled water 75/25 solvent), a single solution per cup. After the spray on the cups had dried, five third-instar larvae of the southern corn rootworm (Diabratica undecimpunctata howardi) were placed into each cup. A moistened dental wick was inserted into each cup to prevent drying and the cups were then covered. The cups were then held at 27°C and 50% relative humidity for 48 hours, after which time mortality readings were taken. Compounds 1, 2, 3, 4, 5, 6, 7, 9 and 10 gave greater than 80% mortality of the southern corn rootworm at 1000 ppm.

## Example 19

### Two-Spotted Spider Mites

Test units, each consisting of a 2-ounce bottle containing 50 mL of compound/solution (distilled water solvent) in which roots of 10 inch red kidney bean plants had been submerged. Each red kidney nean leaf was infested with approximately 50 two-spotted spider mite (Tetranychus urticae) nymphs and adults. Test units were then held at 27°C at 40 to 50% relative humidity for 48 hours. Compound 1 gave greater than 80% mortality of two-spotted spider mites at 5 ppm in a solution uptake test.

## Example 20

### Green Peach Aphid

Test units, each consisting of a 2-ounce bottle containing 25 mL of compound/solution (distilled water solvent) in which roots of 2 week old turnip plants had been submerged. Each turnip leaf was infested with approximately 50 green peach aphid (Myzus persicae) nymphs and adults. Test units were then held at 27° C at 40% relative humidity for 48 hours. Results show that Compounds 6 and 9 gave greater than 80% control of the green peach aphid at 5 ppm in the solution uptake test.

## Example 21

### Nematocidal Activity

Cucumber seeds are planted in a sand-soil mixture which has been inoculated with root knot nematode larvae. Test compounds 4 and 9 are applied to the sand-soil surface as an acetone-water solution at a rate which approximates 2 kg/ha. Twelve to fourteen days after treatent, the percent control of the nematodes is determined by comparing the number of knots on the test root system to the number of knots on an untreated, inoculated check. Both compounds show better than 80% control.

## Claims

1. A compound of the formula

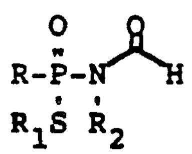

I

wherein

R is $C_1$ to $C_5$ alkyl, $C_2$ to $C_5$ alkenyl, $C_3$ to $C_6$ alkynyl, $C_3$ to $C_6$ cycloalkyl, $C_4$ to $C_7$ alkylcycloalkyl, phenyl or benzyl said phenyl or benzyl may be optionally substituted by 1 to 3 substituents selected from W;

$R_1$ is $C_3$ to $C_8$ alkyl unsubstituted or optionally substituted by $C_1$ to $C_3$ alkoxy, $C_2$ to $C_4$ alkoxycarbonyl, CN, $NO_2$, $C_1$ to $C_3$ alkylthio or 1 to 3 fluorines; phenyl or benzyl said phenyl or benzyl may be optionally substituted by 1 to 3 substituents selected from W;

$R_2$ is $C_1$ to $C_6$ alkyl optionally substituted by 1 to 3 halogens, $NO_2$, $C_1$ to $C_3$ alkoxy, $C_1$ to $C_3$ alkylthio, CN, $CO_2R_3$, $CONR_4R_5$, phenoxy and phenylthio, said phenoxy and phenylthio optionally substituted with 1 to 3 substituents selected from W;

$R_3$ is $C_1$ to $C_6$ alkyl unsubstituted or optionally substituted by 1 to 3 halogens, CN, $C_1$ to $C_3$ alkoxy or $C_1$ to $C_3$ alkylthio; phenyl or benzyl said phenyl or benzyl may be optionally substituted with 1 to 3 substituents selected from W;

$R_4$ and $R_5$ are H, $C_1$ to $C_4$ alkyl, or taken together:

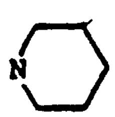 , 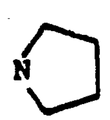 , 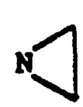 , 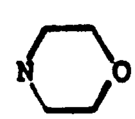 ; and

W is H, halogen, $C_1$ to $C_3$ alkoxy, $C_1$ to $C_3$ alkylthio, $C_1$ to $C_3$ alkyl, $C_1$ to $C_3$ haloalkyl, $C_1$ to $C_3$ sulfonylalkyl, $C_1$ to $C_3$ haloalkoxy, CN, $NO_2$, $NH_2$, $C_1$ to $C_3$ alkylamino or $C_2$ to $C_4$ dialkylamino.

2. A compound according to Claim 1 wherein $R_1$ is a $C_3$ to $C_5$ n-alkyl or $C_3$ to $C_8$ branched alkyl said alkyls may be unsubstituted or optionally substituted by benzyl or benzyl substituted by W.

3. A compound according to Claim 2 wherein R is $C_1$ to $C_3$ alkyl, $C_2$ to $C_3$ alkenyl, propargyl, phenyl or phenyl substituted by W; $R_2$ is $C_1$ to $C_6$ alkyl optionally substituted by CN, $CO_2R_3$ or $CONR_4R_5$; and $R_3$ is $C_1$ to $C_6$ alkyl unsubstituted or optionally substituted by 1 to 3 halogens, $C_1$ to $C_3$ alkoxy, $C_1$ to $C_3$ alkylthio or CN.

4. A compound according to Claim 3 wherein R is $C_1$ to $C_2$ alkyl; $R_1$ is $C_3$ to $C_4$ n-alkyl or $C_3$ to $C_5$ branched alkyl; $R_2$ is $C_1$ to $C_2$ alkyl substituted by CN, $CO_2R_3$ or $CONR_4R_5$; $R_3$ is $C_1$ to $C_3$ alkyl; and $R_4$ and $R_5$ are H or $C_1$ to $C_2$ alkyl.

5. A compound according to Claim 4 which is: S-(1-methylpropyl)N-(1-ethoxycarbonylethyl) N-formyl-P-methylphosphonamidothioate.

6. A composition comprising a compound according to any one of Claims 1 to 5 and at least one of a surfactant or diluent.

7. A method for controlling insects comprising applying to the insects or to their environment an effective amount of a compound according to any one of Claims 1 to 5.

8. A method for controlling acarids comprising applying to the acarids or to their environment an effective amount of a compound according to any one of Claims 1 to 5.

9. A method for controlling nematodes comprising applying to the nematodes or to their environment an effective amount of a compound according to any one of Claims 1 to 5.

10. A method for controlling foliar pests comprising applying to the crops to be protected a systemically effective amount of a compound according to any one of Claims 1 to 5.

European Patent Office

# EUROPEAN SEARCH REPORT

Application Number

EP 88 31 2070

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 215 509 (SHELL INTERNATIONALE RESEARCH MIJ.)<br>* Whole document *<br>----- | 1-3,6-10 | C 07 F 9/44<br>C 07 F 9/56<br>C 07 F 9/65<br>A 01 N 57/26 |
| | | | TECHNICAL FIELDS SEARCHED (Int. Cl.4) |
| | | | C 07 F 9/00<br>A 01 N 57/00 |

The present search report has been drawn up for all claims

| Place of search | Date of completion of the search | Examiner |
|---|---|---|
| THE HAGUE | 23-03-1989 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)